(19) Europäisches Patentamt
European Patent Office
Office européen des brevets

(11) **EP 3 462 999 B1**

(12) **FASCICULE DE BREVET EUROPEEN**

(45) Date de publication et mention
de la délivrance du brevet:
**07.04.2021 Bulletin 2021/14**

(21) Numéro de dépôt: **17742470.2**

(22) Date de dépôt: **06.06.2017**

(51) Int Cl.:
*A47F 7/28* (2006.01)          *A45D 40/00* (2006.01)
*B05B 12/02* (2006.01)          *B05B 12/12* (2006.01)

(86) Numéro de dépôt international:
**PCT/FR2017/051431**

(87) Numéro de publication internationale:
**WO 2017/212170 (14.12.2017 Gazette 2017/50)**

(54) **SYSTÈME POUR TESTER UN PARFUM**

SYSTEM ZUM TESTEN EINES PARFUMS

SYSTEM FOR TESTING A PERFUME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2016 FR 1655214**

(43) Date de publication de la demande:
**10.04.2019 Bulletin 2019/15**

(73) Titulaire: **Louis Vuitton Malletier**
**75001 Paris (FR)**

(72) Inventeur: **SEURAT, Aurélie**
**92300 LEVALLOIS-PERRET (FR)**

(74) Mandataire: **Plasseraud IP**
**66, rue de la Chaussée d'Antin**
**75440 Paris Cedex 09 (FR)**

(56) Documents cités:
**EP-A1- 1 172 305          WO-A1-2016/020605**
**DE-A1- 19 938 405          FR-A1- 2 987 761**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

La présente invention concerne les systèmes pour tester des parfums.

Plus particulièrement, l'invention concerne un système pour tester un parfum, comprenant :

- un boîtier comprenant une ouverture,
- un organe de test adapté pour être au moins partiellement inséré à l'intérieur du boîtier à travers l'ouverture, l'organe de test étant réalisé au moins partiellement à partir d'un matériau adapté pour s'imprégner du parfum,
- un dispositif distributeur disposé à l'intérieur du boîtier et adapté pour distribuer le parfum sur l'organe de test, ledit dispositif distributeur étant relié à un récipient contenant le parfum,
- un capteur qui fournit un signal adapté pour détecter la présence ou non présence de l'organe test dans le boîtier,
- un organe d'actionnement disposé à l'intérieur du boîtier et adapté pour actionner le dispositif distributeur, et
- une unité de traitement qui reçoit le signal du capteur et qui pilote l'organe d'actionnement pour provoquer la distribution du parfum sur l'organe de test.

**ETAT DE LA TECHNIQUE ANTERIEURE**

Le document FR 2 987 761 décrit un exemple d'un tel système pour tester un parfum. Cependant, ce système utilise un organe de test en papier ou carton, et ne contrôle pas l'instant de distribution du parfum sur l'organe de test. Ce système ne permet pas d'obtenir une perception complète du parfum, et notamment il ne permet pas d'obtenir les notes de fond, de cœur et de tête du parfum de manière correcte.

**EXPOSE DE L'INVENTION**

La présente invention a pour but de fournir un système amélioré pour tester un parfum.

A cet effet, l'invention propose un système pour tester un parfum du type précité, caractérisé en ce que :

- le matériau de l'organe de test est dur et poreux, et
- l'unité de traitement pilote l'organe d'actionnement à un instant de pulvérisation déterminé par rapport à un instant de détection correspondant à la détection de disparition de présence de l'organe de test.

Grâce à ces dispositions, le système pour tester un parfum selon l'invention distribue du parfum sur un organe de test constitué d'un matériau dur et poreux bien approprié, et il distribue le parfum de manière très contrôlé pendant l'extraction de l'organe de test du boîtier du système, c'est-à-dire peu de temps avant sa perception par l'utilisateur.

Dans divers modes de réalisation du système pour tester un parfum selon l'invention, on peut éventuellement avoir recours en outre à l'une et/ou à l'autre des dispositions suivantes.

Selon un aspect, l'unité de traitement pilote l'organe d'actionnement pour provoquer ladite distribution de parfum sur l'organe de test, uniquement si une durée d'inhibition mesurée entre un instant de pulvérisation précédent et un instant présent est supérieure à une première durée limite, pour éviter de saturer l'organe de test avec une grande quantité de parfum.

Selon un aspect, la première durée limite est égale à 60 minutes.

Selon un aspect, l'unité de traitement pilote automatiquement l'organe d'actionnement en l'absence de détection de disparition de l'organe de test, si la présence de l'organe de test est détectée dans le boîtier pendant une durée de régénération mesurée entre un instant de pulvérisation précédent et un instant présent est supérieure à une seconde durée limite, pour conserver une quantité minimale de parfum sur l'organe de test.

Selon un aspect, la seconde durée limite est égale à 180 minutes.

Selon un aspect, le système comprend en outre un moyen de détection de chargement du récipient, et l'unité de traitement pilote une ou plusieurs fois l'organe d'actionnement pour amorcer le dispositif distributeur à la détection dudit chargement du récipient.

Selon un aspect, le système comprend en outre un bouton d'amorçage, et l'unité de traitement pilote une ou plusieurs fois l'organe d'actionnement pour amorcer le dispositif distributeur à la détection de l'actionnement dudit bouton d'amorçage par un utilisateur.

Selon un aspect, l'organe d'actionnement comprend un moteur pilotable adapté pour faire varier la quantité de parfum distribué par le dispositif distributeur sur l'organe de test.

Selon un aspect, le système comprend en outre un tampon absorbeur disposé à l'intérieur du boîtier et à proximité de l'ouverture, ledit tampon absorbeur étant adapté pour essuyer au moins une portion de l'organe de test pendant l'extraction dudit organe de test.

Selon un aspect, le tampon absorbeur est situé dans une partie inférieure de l'ouverture.

Selon un aspect, l'organe de test comporte dans une direction longitudinale, une première partie adaptée pour s'imprégner du parfum, et une deuxième partie adaptée pour manipuler ledit organe de test, et dans lequel la première partie a une longueur déterminée de telle sorte que, lorsque l'organe de test est dans une position insérée à laquelle le capteur détecte la présence de l'organe de test, la première partie ne dépasse pas vers l'extérieur du boîtier.

## BREVE DESCRIPTION DES DESSINS

D'autres caractéristiques et avantages de l'invention apparaîtront au cours de la description suivante d'au moins un de ses modes de réalisation, donné à titre d'exemple non limitatif, en regard des dessins joints.

Sur les dessins :

- la figure 1 est une vue en perspective schématique d'un système pour tester un parfum avec son organe de test;
- la figure 2 est une vue en perspective montrant la face avant et l'intérieur du système de la figure 1 ;
- la figure 3 est une vue en perspective montrant la face arrière du système de la figure 1 ;
- la figure 4 est une vue en coupe partielle du système selon la ligne IV-IV de la figure 2, montrant la coupe interne de l'ouverture avec le capteur qui détecte l'organe de test inséré ;
- les figures 5a à 5d sont des vues schématiques montrant des étapes successives pendant le retrait de l'organe de test.

Sur les différentes figures, les mêmes références numériques désignent des éléments identiques ou similaires.

## DESCRIPTION DETAILLEE

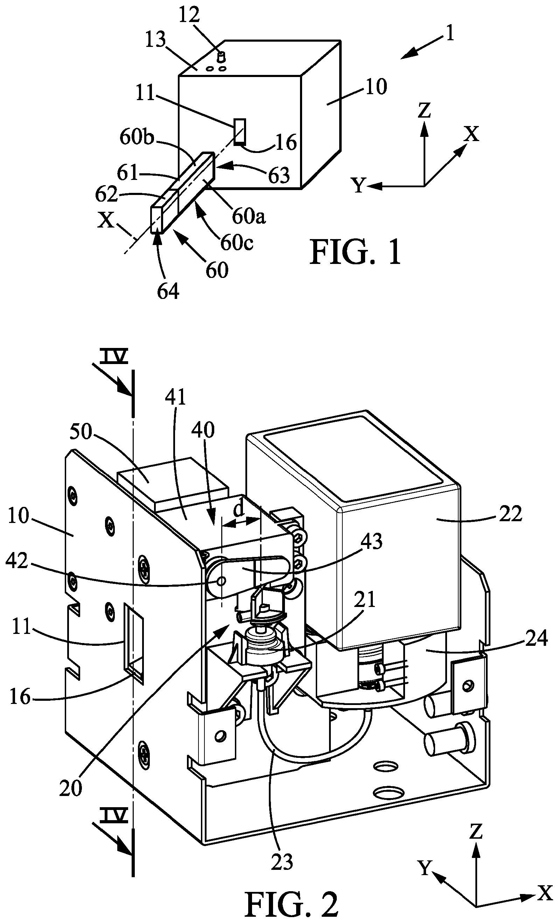

La **figure 1** illustre de manière générale un système pour tester un parfum 1 selon l'invention.

Le système pour tester un parfum 1 comprend tout d'abord :

- un boîtier 10 comportant une ouverture 11,
- un organe de test 60 adapté pour être au moins partiellement inséré à l'intérieur du boîtier à travers l'ouverture 11.

Le boîtier 10 se présente par exemple sous la forme d'un cube, mais peut présenter une forme quelconque. Il peut être réalisé à partir d'un matériau tel que du plastique, du métal, du verre, du bois, etc.

L'ouverture 11 est par exemple ménagée sur une face du boîtier, ladite face étant une face latérale (dans un plan sensiblement vertical) ou une face supérieure (dans un plan sensiblement horizontal). L'ouverture 11 a par exemple une forme rectangulaire, ou par exemple une forme carrée, cylindrique, ou triangulaire, ou quelconque.

L'organe de test 60 est un organe rigide qui s'étend selon une direction longitudinale X pour être au moins partiellement inséré à l'intérieur du boîtier 10.

Cet organe de test 60 a une section transversale, perpendiculaire à la direction longitudinale X, qui est avantageusement complémentaire de la forme de l'ouverture 11, pour que l'organe de test 60 puisse être inséré dans l'ouverture 11 et sans laisser un espace intermédiaire trop important entre l'ouverture et l'organe de test, pour des raisons esthétiques.

L'organe de test 60 du système selon l'invention est réalisé au moins partiellement à partir d'un matériau adapté pour s'imprégner du parfum à l'état liquide ou gazeux, par exemple à partir d'un matériau dur et poreux. Ce matériau est par exemple une céramique poreuse. En variante, ce matériau est un plastique poreux, tel que du Porex™. Ces matériaux durs et poreux permettent une imprégnation ou pulvérisation répétée (non à usage unique) ce qui évite de jeter inutilement des organes de tests. De plus, ce matériaux durs, rigides et poreux sont bien adaptés à la perception du parfum, et notamment la perception de toutes les notes de fond, de cœur et de tête. De plus, la pulvérisation peut être périodiquement répétée sans altérer cette perception. Et, ce matériau est durable et le nombre de pulvérisations possible est très élevé, contrairement aux organes de test en papier ou carton qui sont à unique utilisation.

On entend par « matériau dur », un matériau tel que l'utilisateur ne peut pas visiblement déformer l'organe de test 60. C'est donc un matériau ayant une dureté de surface élevée. Ces matériaux sont également généralement très rigides, c'est-à-dire qu'ils ont une rigidité globale élevée.

On entend par « matériau poreux », un matériau qui comprend des cavités ou pores aptes à être remplies par un fluide. Ces pores ont par exemple une taille comprise entre 10 $\mu$m et 200 $\mu$m. Avantageusement, ces pores ont une taille telle qu'ils sont difficilement visibles par l'utilisateur pour donner un aspect continu et esthétique à l'utilisateur.

L'organe de test 60 comprend par exemple dans la direction longitudinale X :

- une première partie 61 qui s'étend jusqu'à une extrémité d'insertion 63, et
- une deuxième partie 62 qui s'étend à l'opposé de l'extrémité d'insertion 63, jusqu'à une extrémité de préhension 64, ladite deuxième partie étant ainsi adaptée pour qu'un utilisateur manipule avec sa main ledit organe de test 60.

Ainsi, l'utilisateur peut insérer l'organe de test 60 à travers l'ouverture 11 jusqu'à une position insérée pour qu'au moins une portion de la première partie 61 soit éventuellement imprégnée par du parfum à l'intérieur du boîtier 10, notamment pendant l'extraction de l'organe de test 60. Après avoir retiré l'organe de test 60 du boîtier 10, l'utilisateur peut sentir le parfum imprégné sur la première partie 61 de l'organe de test 60.

La première partie 61 a par exemple une longueur déterminée de telle sorte que, lorsque l'organe de test est dans la position insérée, la première partie 61 ne dépasse pas vers l'extérieur du boîtier et seul la deuxième partie 62 est visible depuis l'extérieur du boîtier. Le système est ainsi plus esthétique.

Comme représenté sur la vue interne de la **fi-**

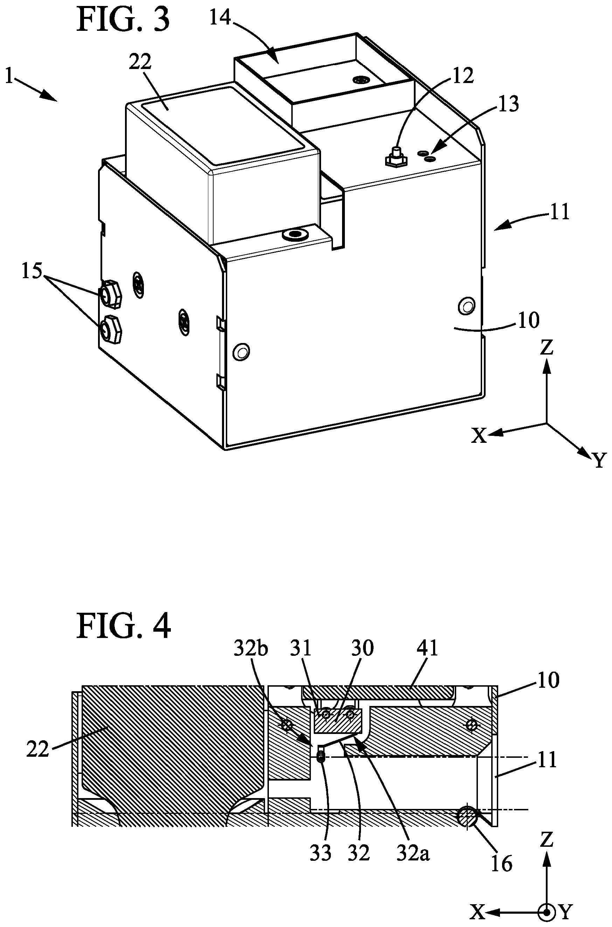

gure 2 et la coupe de la **figure 4,** le système pour tester un parfum 1 comprend en outre :

- un dispositif distributeur 20 de parfum disposé à l'intérieur du boîtier, et adapté pour distribuer un parfum sur l'organe de test 60 lorsque celui-ci est dans la position insérée ou entre la position insérée et une position retirée, positions dans lesquelles l'organe de test 60 fait face au dispositif distributeur 20, à une distance prédéterminée, pour recevoir du parfum (notamment le dispositif distributeur peut distribuer le parfum pendant l'extraction de l'organe de test 60, c'est-à-dire entre lesdites positions insérée et rétractée),
- un capteur 30 qui fournit un signal adapté pour détecter la présence ou non présence de l'organe de test dans l'ouverture 11, et plus spécifiquement pour détecter la présence ou non présence de l'organe de test 60 dans la position insérée à l'intérieur du boîtier 10,
- un organe d'actionnement 40 disposé à l'intérieur du boîtier et adapté pour actionner le dispositif distributeur, pour que du parfum soit distribué (projeté) sur l'organe de test 60, et
- une unité de traitement 50 qui reçoit le signal du capteur 30 et qui pilote l'organe d'actionnement 40.

Le dispositif distributeur 20 est par exemple constitué d'une pompe 21 reliée à un récipient 22 de parfum par un tube plongeur 23.

Le récipient 22 contient le parfum. Ce récipient est avantageusement situé à l'intérieur du boîtier 10, mais il peut être situé à l'extérieur du boîtier 10, auquel cas, le tube plongeur 23 sort du boîtier pour être connecté au récipient (non représenté).

Le dispositif distributeur 20 représenté peut projeter dans une direction horizontale, une quantité de parfum sur une face latérale 60a de l'organe de test 60. En variante, le dispositif distributeur 20 pourrait être orienté pour projeter du parfum dans une direction verticale sur une face supérieure 60b ou une face inférieure 60c de l'organe de test 60, ou pour projeter du parfum dans toute autre direction adaptée à la forme de l'organe de test 60.

Avantageusement, le dispositif distributeur 20 projette une quantité de parfum perpendiculairement à une face de l'organe de test 60 qui reçoit ledit parfum pour éviter de perdre une portion de cette quantité.

Le capteur 30 peut être un capteur de type mécanique, optique, magnétique ou autre.

Dans le mode de réalisation représenté, le capteur 30 est de type mécanique, et il comprend un corps 31, un levier 32 qui s'étend en dehors du corps 31 et qui est articulé en rotation à une première extrémité 32a à l'intérieur du corps 31 et qui est muni d'une butée 33 à une seconde extrémité 32b libre à l'extérieur du corps. Lorsque la butée 33 est déplacée par un contact avec l'organe de test 60, le levier 32 bascule vers la fermeture un contacteur électrique à l'intérieur du corps. Lorsque la butée 33 n'est plus en contact avec l'organe de test 60 dans sa position insérée, le levier 32 bascule à l'inverse vers l'ouverture ledit contacteur électrique. Ce contacteur électrique génère ainsi un signal représentatif de la présence ou de l'absence de l'organe de test 60 dans la position insérée. Notamment, le changement d'état de ce signal permet à l'unité de traitement de détecter la disparition de présence de l'organe de test 60 de la position insérée, et donc de connaître avec précision l'instant de détection pour déterminer l'instant de pulvérisation.

L'organe d'actionnement 40 est par exemple un moteur 41, avantageusement de type pas-à-pas, qui fait pivoter un axe de moteur 42 qui entraine un bras 43, ledit bras 43 étant en contact avec le dispositif distributeur 20 à une distance d de l'axe moteur, afin d'actionner le dispositif distributeur 20 par le pivotement du bras 43.

Ainsi, l'unité de traitement 50 comprend un microprocesseur avec, par exemple comme cela est bien connu, des entrées/sorties numériques et analogiques, une mémoire, une horloge, etc... Les entrées sorties sont reliées au capteur 30 et à l'organe d'actionnement 40. La mémoire stocke des codes d'instructions adaptés au fonctionnement du système, et des informations.

Le système 1 comprend une alimentation électrique qui fournit de l'énergie à l'organe d'actionnement 40 et l'unité de traitement 50. Eventuellement, comme représenté en **figure 3,** cette alimentation électrique est formée d'un boîtier 14 contenant une ou plusieurs piles ou batteries (rechargeables), ce qui évite de conserver une connexion au secteur.

Le système 1 comprend un dispositif d'affichage 13, qui permet de visualiser :

- un défaut d'insertion du récipient 22 ou inversement une bonne insertion du récipient 22, pour que l'utilisateur vérifie la mauvaise ou bonne alimentation en parfum, et/ou
- un défaut du niveau de charge des piles ou batteries ou inversement une bonne charge de celles-ci, pour que l'utilisateur vérifie la mauvaise ou bonne alimentation en électricité.

Ce dispositif d'affichage 13 permet donc à l'utilisateur de vérifier les conditions d'alimentation du système pour son bon fonctionnement. Ce dispositif d'affichage 13 peut être constitué simplement d'une ou plusieurs diodes électroluminescentes (DEL) ou éventuellement d'un écran si de nombreuses informations sont à visualiser. Dans le cas de LEDS, un code de couleurs ou de clignotements à diverses cadences ou tout autre type de codage peut être utilisé afin de délivrer les informations sur le fonctionnement du système 1.

Le système 1 comprend un bouton de commande 12 connecté à l'unité de traitement 50 et permettant de provoquer immédiatement une distribution de parfum sur l'organe de test 60 si celui-ci est détecté par le capteur 30 comme étant inséré dans le boîtier. Ce système 1 comprend en outre une procédure automatique de distribution de parfum décrite ci-après.

**Dans le système pour tester un parfum selon l'invention,** l'unité de traitement 50 reçoit le signal du capteur 30 et pilote l'organe d'actionnement 40 à un instant précis pendant l'extraction de l'organe de test 60 du boîtier 10. Grâce à cette disposition, le parfum est distribué sur l'organe de test 60 peu de temps avant l'expérience olfactive de l'utilisateur. Son expérience est ainsi plus contrôlée et reproduit mieux les notes de fond, les notes de cœur et les notes de tête ressenties du parfum, c'est-à-dire tout le spectre olfactif du parfum.

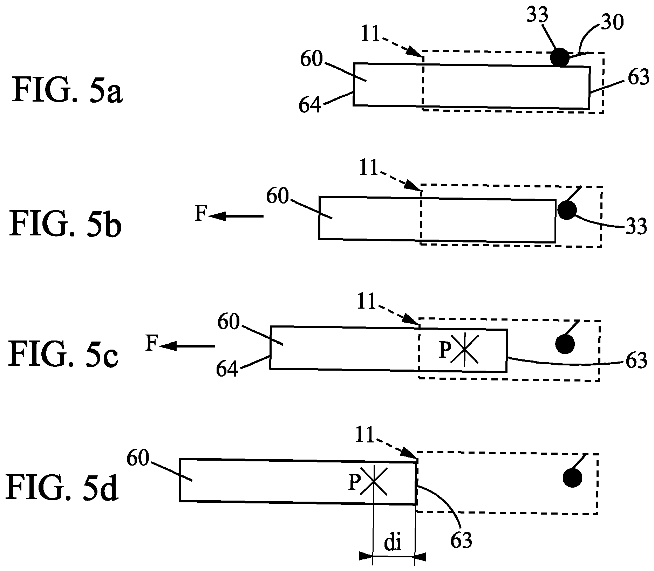

L'extraction de l'organe de test 60 du boîtier 10 est illustrée sur **les figures 5a à 5d.**

En figure 5a, l'organe de test 60 est en position insérée et le signal du capteur 30 est dans un premier état qui correspond à une détection de présence de l'organe de test.

En figure 5b, l'organe de test 60 commence à être retiré de l'ouverture 11 comme le représente la flèche F. Par exemple (cas d'un capteur mécanique), la butée 33 est libérée du contact avec l'organe de test 60, ce qui fait basculer le levier 32 et provoque la commutation du signal du capteur 30 du premier état vers un second état qui correspond à la détection de la non présence (absence) de l'organe de test 60 à la position insérée, à un instant de détection td.

Grâce à cette commutation du signal 30, l'unité de traitement 50 détecte donc la disparition de présence de l'organe de test 60 du boîtier 10, sensiblement à l'instant de détection td.

En figure 5c, l'organe de test 60 continu à être retiré de l'ouverture 11. Il est en position retirée (entre la position insérée et la position extraite). L'unité de traitement 50 commande l'organe d'actionnement 40 pendant ce retrait de l'organe de test, peu de temps après l'instant de détection td, pour qu'une distribution de parfum soit effectuée sur l'organe de test 60 à un instant de pulvérisation tp.

Autrement dit, on génère une pulvérisation pendant le retrait de l'organe de test de l'ouverture 11, à un instant de pulvérisation tp, tel que :

$$tp = td + dt$$

où

td est l'instant de détection, et
dt est une durée de retard.

Cet instant de pulvérisation tp est l'instant de détection td auquel on ajoute une durée de retard dt prédéterminée. Cette durée de retard dt cumule au moins le temps de réponse de l'unité de traitement 50 (électronique), le temps de réponse de l'organe d'actionnement 40 (moteur) et le temps de réponse du dispositif distributeur 20 (pompe).

D'un autre côté, l'utilisateur de l'organe de test 60 le retire de l'ouverture 11 du boîtier 10 avec un certain profil de vitesse moyen.

Le profil de vitesse de l'extraction de l'organe de test 60, la durée de retard dt de la distribution et la position dans la direction longitudinale X de la pompe 21 par rapport au capteur 30 déterminent la position P de la distribution du parfum sur l'organe de test 60 à l'instant de pulvérisation tp comme illustré sur la figure 5c. Cette position P est par exemple à une distance di de l'extrémité d'insertion 63 de l'organe de test 60.

En figure 5d, l'organe de test 60 est en position extraite, totalement extrait du boîtier 10 et l'utilisateur peut apprécier le parfum déposé sur celui-ci.

Notamment, grâce à l'utilisation d'un organe de test 60 avec un matériau dur et poreux, combiné avec la distribution lors de l'extraction du boîtier, c'est-à-dire au dernier moment, l'utilisateur du système peut expérimenter tout le spectre olfactif du parfum comme explicité précédemment.

**Selon une première variante,** l'unité de traitement 50 commande l'organe d'actionnement 40 pour provoquer la distribution de parfum sur l'organe de test 60 pendant le retrait de l'organe de test 60, uniquement si le dernier (précédent) instant de pulvérisation tp' est suffisamment ancien, c'est-à-dire uniquement si une durée d'inhibition di mesurée entre l'instant de pulvérisation précédent tp' et l'instant présent t est supérieure à une première durée limite DL1.

Autrement dit, on génère une pulvérisation pendant le retrait de l'organe de test de l'ouverture 11, à un instant de pulvérisation tp, tel que :

$$tp = td + dt$$

si di = t - tp' >= DL1.

On assure ainsi que la durée entre deux pulvérisations successives est supérieure à la première durée limite DL1, c'est-à-dire :

$$tp - tp' >= DL1.$$

On évite ainsi de distribuer du parfum sur l'organe de test 60 de manière trop fréquente, c'est-à-dire deux fois de suite à un intervalle rapproché, inférieur à ladite première durée limite DL1. On évite ainsi de distribuer une quantité trop importante de parfum sur l'organe de test pendant une certaine durée, et on évite ainsi de saturer l'organe de test 60 avec une grande quantité de parfum. On évite donc de modifier de manière inappropriée le spectre olfactif du parfum, c'est-à-dire ses notes de fond, ses notes de cœur et ses notes de tête ressenties.

Cette première durée limite DL1 est par exemple modifiable par paramétrage de l'unité de traitement, par exemple par téléchargement d'un nouveau logiciel de cette unité de traitement.

Cette première durée limite DL1 a éventuellement une valeur comprise entre 5 minutes et 120 minutes. On évite ainsi que l'organe de test 60 ne soit saturé du parfum, comme explicité ci-dessus. Cette première durée limite DL1 est par exemple de 60 minutes.

Selon une autre variante, l'unité de traitement 50 commande l'organe d'actionnement 40 périodiquement de manière automatique ou forcée (sans retrait ou extraction de l'organe de test, i.e. en l'absence de la détection de disparition de l'organe de test de la position insérée dans le boîtier). On évite ainsi que l'organe de test 60 ne soit pas imprégné avec du parfum depuis une très longue période, ce qui modifierait également de manière inappropriée le spectre olfactif du parfum : les notes de fond, les notes de cœur et les notes de tête ressenties du parfum. Notamment, cette procédure de pulvérisations périodiques permet de mieux conserver une quantité minimale de parfum sur l'organe de test 60, ce qui permet de conserver tout le spectre olfactif du parfum, et notamment la note de cœur.

Notamment, l'unité de traitement 50 commande automatiquement l'organe d'actionnement 40 en l'absence de disparition de l'organe de test 60, si la présence de l'organe de test 60 est détectée à l'intérieur du boîtier 10 pendant une durée de régénération dr mesurée entre un instant de pulvérisation précédent tp' et un instant présent t est supérieure à une seconde durée limite DL2.

Autrement dit, on génère de manière automatique ou forcée une pulvérisation de l'organe de test 60 dans la position insérée, sans aucune détection de retrait dudit organe de test, si dr = t - tp' >= DL2.

On assure ainsi que la durée entre deux pulvérisations successives est inférieure à la seconde durée limite DL2, c'est-à-dire :

$$tp - tp' <= DL2.$$

Cette seconde durée limite DL2 est par exemple modifiable par paramétrage de l'unité de traitement, par exemple par téléchargement d'un nouveau logiciel de cette unité de traitement.

Cette seconde durée limite DL2 a éventuellement une valeur comprise entre 120 minutes et 600 minutes. On évite ainsi que l'organe de test 60 ne soit trop faiblement imprégné du parfum, comme explicité ci-dessus. Cette seconde durée limite DL2 est par exemple de 180 minutes.

Il va de soi que l'unité de traitement mémorise au moins l'instant précédent de pulvérisation tp'. Toute nouvelle pulvérisation provoquée par extraction de l'organe de test 60 ou automatique par ladite seconde durée limite DL2, fait que la valeur de l'instant précédent de pulvérisation tp' est mis à jour avec la valeur de l'instant présent t.

Selon une autre variante, le moteur 41 est adapté pour varier la quantité de parfum distribué par le dispositif distributeur 20. Notamment, si le dispositif distributeur 20 est une pompe 21 du type utilisé dans les flacons de parfum, cette pompe 21 est apte à projeter une quantité prédéterminée de parfum lorsque la tête dudit dispositif distributeur 20 est actionnée entièrement. Par exemple, la pompe est apte à distribuer une quantité prédéterminée de 100 microlitres, ladite quantité prédéterminée étant une quantité maximale que peut délivrer ladite pompe par une unique action. Ainsi, le moteur 41 peut avoir une amplitude d'action modulable pour que le dispositif distributeur 20 ne distribue qu'une fraction (quantité plus petite) de la quantité prédéterminée. Par exemple, le moteur 41 sera pilotable pour distribuer un quart (1/4), la moitié (1/2), trois-quarts (3/4) ou la totalité de la quantité prédéterminée, maximale. Eventuellement, d'autres fractions plus précises sont possibles.

Grâce à cette modulation du pilotage du moteur 41 de l'organe d'actionnement, il est possible de d'imprégner l'organe de test 60 avec une quantité de parfum réglable et adaptée à chaque composition de parfum. Cette quantité prédéterminée est par exemple modifiable par paramétrage de l'unité de traitement 50 comme précédemment.

Selon une autre variante, le système 1 comprend en outre un moyen de détection de chargement (non représenté) qui détecte l'insertion d'un récipient 22 dans un logement 24 du système, lors d'une première mise en route du système ou lors du changement du récipient 22 lorsque celui-ci est vide ou proche d'un état vide. Le système 1 utilise éventuellement le dispositif d'affichage 13 pour informer l'utilisateur de la mauvaise ou bonne insertion du récipient 22.

Après la détection de l'insertion du récipient 22 dans le logement 24, le système commande une ou plusieurs fois l'organe d'actionnement 40 pour amorcer le dispositif distributeur 20. L'unité de traitement 50 commande ainsi successivement une pluralité de distributions de parfum, de préférence avec la quantité prédéterminée maximale de la pompe. Cette succession de distribution est effectuée à une cadence compatible avec les performances de la pompe. Cet amorçage permet de remplir le circuit de distribution de parfum, c'est-à-dire le tube plongeur 23, la pompe 21, et tout autre élément dudit circuit. Après cet amorçage, le système 1 est alors prêt à fonctionner immédiatement.

Selon une autre variante, le système comprend en outre un bouton d'amorçage connecté à l'unité de traitement 50 afin de déclencher une ou plusieurs fois l'organe d'actionnement et donc forcer un amorçage du dispositif distributeur 20. Le bouton d'amorçage est éventuellement le même bouton que le bouton de commande 12, les deux fonctions pouvant être distinguées par l'unité de commande par la caractéristique temporelle du signal du bouton. Ainsi, un appui long ou multiple déclenchera la fonction d'amorçage et un appui simple de faible durée déclenchera une simple distribution de parfum.

Selon une autre variante, le système 1 peut éventuellement comprendre un moyen de détection de niveau de remplissage du récipient 22 ou estimer ce niveau de remplissage. Dans ce cas, l'unité de traitement 50 par exemple comptabilise chaque commande de l'organe d'actionnement 40 et/ou chaque fraction de la quantité prédéterminée pour en déduire une estimation du niveau de remplissage. Le système 1 utilise éventuellement le dispositif d'affichage 13 pour informer l'utilisateur de ce niveau de remplissage du récipient 22.

Selon une autre variante, le système 1 comprend un tampon absorbeur 16 disposé à l'intérieur du boîtier et à proximité de l'ouverture 11 et dans une position pour essuyer au moins une portion de l'organe de test 60 pendant son extraction. On évite ainsi tout surplus sur l'organe de test. Ce tampon absorbeur 16 est par exemple un cylindre constitué de fibres absorbantes, comme du coton. Ce tampon absorbeur 16 est par exemple situé dans une partie inférieure de l'ouverture 11 pour recueillir du parfum qui coulerait vers le bas. Ce tampon absorbeur 16 peut également être situé en position latérale de l'ouverture, notamment du côté duquel le dispositif distributeur 20 projette du parfum sur l'organe de test 60 afin de recueillir tout surplus. Eventuellement, ce tampon absorbeur 16 peut être situé sur toute la périphérie de l'ouverture. On peut noter que ce tampon absorbeur contribue également à la sensation de qualité lors de l'insertion et du retrait de l'organe de test 60 du boîtier 10 puisqu'il amorti les bruits de glissement.

Selon une autre variante, le système 1 comprend un boîtier 10 comprenant une pluralité d'ouvertures 11 ou une pluralité de boîtiers 10, chaque boîtier comprenant une ouverture 11. Dans un tel système, chaque ouverture 11 est apte à recevoir un organe de test 60.

Les ouvertures 11 sont alimentées avec un même récipient (un seul parfum) ou des récipients différents (plusieurs parfums identiques ou différents).

De préférence, les organes de test 60 et les ouvertures 11 sont identifiés pour que chaque organe de test ne soit inséré que dans l'ouverture associée de telle sorte qu'un organe de test particulier ne soit imprégné qu'avec un seul et unique parfum et selon un historique des instants temporels des pulvérisations maitrisé et mémorisé par la ou les unité(s) de traitement 50.

Les organes de test 60 et les ouvertures 11 ont des formes adaptées pour qu'un organe de test 60 ne puis être complètement inséré (jusqu'à détection par le capteur) dans une seule ouverture 11 pour éviter toute erreur. Ainsi, un organe de test inséré dans une mauvaise ouverture (non associée) ne pourra pas être imprégné par le parfum de cette ouverture. Les formes adaptées de l'organe de test 60 sont soit au niveau de la section transversale à la direction longitudinale X, soit dans la direction longitudinale X à la façon d'une clef codée.

Dans le cas où une pluralité de boîtiers 10 est utilisée, ces boîtiers sont avantageusement identiques. Si nécessaire, une alimentation secteur unique alimente les divers boîtiers par des connecteurs d'alimentation 15 (visibles en **figure 3**) situés au dos de chaque boîtier 10 et permettant le chaînage des alimentations des boîtiers 10.

## Revendications

1. **Système pour tester un parfum (1),** comprenant :

   - un boîtier (10) comprenant une ouverture (11),
   - un organe de test (60) adapté pour être au moins partiellement inséré à l'intérieur du boîtier à travers l'ouverture, l'organe de test étant réalisé au moins partiellement à partir d'un matériau adapté pour s'imprégner du parfum,
   - un dispositif distributeur (20) disposé à l'intérieur du boîtier et adapté pour distribuer le parfum sur l'organe de test, ledit dispositif distributeur étant relié à un récipient contenant le parfum,
   - un capteur (30) qui fournit un signal adapté pour détecter la présence ou non présence de l'organe test dans le boîtier,
   - un organe d'actionnement (40) disposé à l'intérieur du boîtier et adapté pour actionner le dispositif distributeur, et
   - une unité de traitement (50) qui reçoit le signal du capteur et qui pilote l'organe d'actionnement pour provoquer la distribution du parfum sur l'organe de test, ledit système étant **caractérisé en ce que** :

      - le matériau de l'organe de test (60) est dur et poreux, et
      - l'unité de traitement (50) pilote l'organe d'actionnement à un instant de pulvérisation (tp) déterminé par rapport à un instant de détection (td) correspondant à la détection de disparition de présence de l'organe de test.

2. Système selon la revendication 1, dans lequel l'unité de traitement (50) pilote l'organe d'actionnement (40) pour provoquer ladite distribution de parfum sur l'organe de test, uniquement si une durée d'inhibition (di) mesurée entre un instant de pulvérisation précédent (tp') et un instant présent (t) est supérieure à une première durée limite (DL1), pour éviter de saturer l'organe de test avec une grande quantité de parfum.

3. Système selon la revendication 2, dans lequel la première durée limite (DL1) est égale à 60 minutes.

4. Système selon l'une des revendications 1 à 3, dans lequel l'unité de traitement (50) pilote automatiquement l'organe d'actionnement (40) en l'absence de détection de disparition de l'organe de test, si la présence de l'organe de test est détectée dans le boîtier pendant une durée de régénération (dr) mesurée entre un instant de pulvérisation précédent (tp') et un instant présent (t) est supérieure à une seconde durée limite (DL2), pour conserver une quantité minimale de parfum sur l'organe de test.

5. Système selon la revendication 4, dans lequel la seconde durée limite (DL2) est égale à 180 minutes.

6. Système selon l'une des revendications 1 à 5, comprenant en outre un moyen de détection de chargement du récipient (22), et l'unité de traitement (50) pilote une ou plusieurs fois l'organe d'actionnement pour amorcer le dispositif distributeur (20) à la détection dudit chargement du récipient.

7. Système selon l'une des revendications 1 à 6, comprenant en outre un bouton d'amorçage, et l'unité de traitement (50) pilote une ou plusieurs fois l'organe d'actionnement pour amorcer le dispositif distributeur (20) à la détection de l'actionnement dudit bouton d'amorçage par un utilisateur.

8. Système selon l'une des revendications 1 à 7, dans lequel l'organe d'actionnement (40) comprend un moteur (41) pilotable adapté pour faire varier la quantité de parfum distribué par le dispositif distributeur (20) sur l'organe de test.

9. Système selon l'une des revendications 1 à 8, comprenant en outre un tampon absorbeur (16) disposé à l'intérieur du boîtier et à proximité de l'ouverture (11), ledit tampon absorbeur étant adapté pour essuyer au moins une portion de l'organe de test (60) pendant l'extraction dudit organe de test.

10. Système selon la revendication 9, dans lequel le tampon absorbeur (16) est situé dans une partie inférieure de l'ouverture.

11. Système selon l'une des revendications 1 à 10, dans lequel l'organe de test (60) comporte dans une direction longitudinale (X), une première partie (61) adaptée pour s'imprégner du parfum, et une deuxième partie (62) adaptée pour manipuler ledit organe de test, et dans lequel la première partie (61) a une longueur déterminée de telle sorte que, lorsque l'organe de test est dans une position insérée à laquelle le capteur détecte la présence de l'organe de test, la première partie ne dépasse pas vers l'extérieur du boîtier.

**Patentansprüche**

1. **Parfüm-Testsystem (1),** umfassend:

- ein Gehäuse (10), umfassend eine Öffnung (11),
- ein Testelement (60), das dazu ausgebildet ist, wenigstens teilweise durch die Öffnung in das Innere des Gehäuses eingeführt zu werden, wobei das Testelement wenigstens teilweise aus einem Material hergestellt ist, das dazu ausgebildet ist, von Parfüm durchtränkt zu werden,
- eine Abgabevorrichtung (20), die im Inneren des Gehäuses angeordnet und dazu ausgebildet ist, das Parfüm auf das Testelement abzugeben, wobei die Abgabevorrichtung mit einem Behälter verbunden ist, der das Parfüm enthält,
- einen Sensor (30), der ein Signal liefert, das dazu ausgebildet ist, die Anwesenheit oder Abwesenheit des Testelements in dem Gehäuse zu erkennen,
- ein Betätigungselement (40), das innerhalb des Gehäuses angeordnet und dazu ausgebildet ist, die Abgabevorrichtung zu betätigen, und
- eine Verarbeitungseinheit (50), die das Signal von dem Sensor empfängt und die das Betätigungselement steuert, um die Verteilung des Parfüms auf dem Testelement zu bewirken, wobei das System **dadurch gekennzeichnet ist, dass:**

  - das Material des Testelements (60) hart und porös ist, und
  - die Verarbeitungseinheit (50) das Betätigungselement zu einem bestimmten Sprühzeitpunkt (tp) relativ zu einem Erkennungszeitpunkt (td) steuert, der der Erkennung des Verschwindens der Anwesenheit des Testelements entspricht.

2. System nach Anspruch 1, wobei die Verarbeitungseinheit (50) das Betätigungselement (40) steuert, um die Abgabe von Parfüm auf das Testelement nur dann zu veranlassen, wenn eine zwischen einem vorhergehenden Sprühzeitpunkt (tp') und einem gegenwärtigen Zeitpunkt (t) gemessener Muting-Zeitraum (di) größer ist als ein erstes Zeitlimit (DL1), um eine Sättigung des Testelements mit einer großen Menge an Parfüm zu vermeiden.

3. System nach Anspruch 2, wobei das erste Zeitlimit (DL1) gleich 60 Minuten ist.

4. System nach einem der Ansprüche 1 bis 3, wobei die Verarbeitungseinheit (50) das Betätigungselement (40) bei fehlender Erkennung des Verschwindens des Testelements automatisch steuert, wenn das Vorhandensein des Testelements im Gehäuse während einer zwischen einem vorherigen Sprühzeitpunkt (tp') und einem aktuellen Zeitpunkt (t) gemessen Regenerationszeit (dr), größer ist als ein zweites Zeitlimit (DL2), um eine Mindestmenge an Parfüm auf dem Testelement zu bewahren.

5. System nach Anspruch 4, wobei das zweite Zeitlimit (DL2) gleich 180 Minuten ist.

6. System nach einem der Ansprüche 1 bis 5, welches ferner ein Mittel zum Erkennen des Beladens des Behälters (22) umfasst, und wobei die Verarbeitungseinheit (50) das Betätigungselement ein oder mehrere Male steuert, um die Abgabevorrichtung (20) bei Erkennung des Beladens des Behälters in Gang zu setzen.

7. System nach einem der Ansprüche 1 bis 6, welches ferner eine Initiierungstaste umfasst, und wobei die Verarbeitungseinheit (50) das Betätigungselement ein oder mehrere Male steuert, um die Abgabevorrichtung (20) bei Erkennung der Betätigung der Initiierungstaste durch einen Benutzer in Gang zu setzen.

8. System nach einem der Ansprüche 1 bis 7, wobei das Betätigungselement (40) einen steuerbaren Motor (41) umfasst, der dazu ausgebildet ist, die von der Abgabevorrichtung (20) zu dem Testelement abgegebene Parfümmenge zu verändern.

9. System nach einem der Ansprüche 1 bis 8, welches ferner ein absorbierendes Kissen (16) umfasst, das innerhalb des Gehäuses und in der Nähe der Öffnung (11) angeordnet ist, wobei das absorbierende Kissen dazu ausgebildet ist, wenigstens einen Teil des Testelements (60) während der Entnahme des Testelements zu abzuwischen.

10. System nach Anspruch 9, wobei das absorbierende Kissen (16) in einem inneren Bereich der Öffnung angeordnet ist.

11. System nach einem der Ansprüche 1 bis 10, wobei das Testelement (60) in einer Längsrichtung (X) einen ersten Abschnitt (61) umfasst, der dazu ausgebildet ist, von Parfüm durchtränkt zu werden, und einen zweiten Abschnitt (62) umfasst, der dazu ausgebildet ist, das Testelement zu handhaben, und wobei der erste Teil (61) eine vorbestimmte Länge aufweist, derart dass, wenn sich das Testelement in einer eingeführten Position befindet, in der der Sensor das Vorhandensein des Testelements erkennt, der erste Teil nicht zur Außenseite des Gehäuses vorsteht.

**Claims**

1. **System for testing a perfume (1),** comprising:

   - a housing (10) comprising an opening (11),

   - a test member (60) able to be at least partially inserted into the housing through the opening, the test member being at least partially made of a material able to be impregnated with perfume,
   - a dispensing device (20) arranged inside the housing and able to dispense the perfume onto the test member, said dispensing device being connected to a container containing the perfume,
   - a sensor (30) which provides a signal suitable for detecting the presence or non-presence of the test member in the housing,
   - an actuator (40) arranged inside the housing and able to actuate the dispensing device, and
   - a processing unit (50) which receives the signal from the sensor and which controls the actuator to cause perfume to be dispensed onto the test member, said system being **characterized in that:**

   - the material of the test member (60) is hard and porous, and
   - the processing unit (50) controls the actuator at a spraying time (tp) determined relative to a detection time (td) corresponding to the detection of the disappearance of the test member.

2. System according to claim 1, wherein the processing unit (50) controls the actuator (40) to cause said dispensing of perfume onto the test member, only if a prevention period (di) measured between a previous spraying time (tp') and a present time (t) exceeds a first time limit (DL1), in order to avoid saturating the test member with a large amount of perfume.

3. System according to claim 2, wherein the first time limit (DL1) is equal to 60 minutes.

4. System according to one of claims 1 to 3, wherein the processing unit (50) automatically controls the actuator (40) in the absence of detecting the disappearance of the test member, if the presence of the test member is detected in the housing during a regeneration period (dr) measured between a previous spraying time (tp') and a present time (t) is greater than a second limit time (DL2), in order to maintain a minimum amount of perfume on the test member.

5. System according to claim 4, wherein the second limit time (DL2) is 180 minutes.

6. System according to one of claims 1 to 5, further comprising a means (22) for detecting the loading of the container, and the processing unit (50) controls the actuator one or more times in order to prime the dispensing device (20) upon detecting said loading of the container.

7. System according to one of claims 1 to 6, further comprising a priming button, and the processing unit (50) controls the actuator one or more times in order to prime the dispensing device (20) upon detecting the actuation of said priming button by a user.

8. System according to one of claims 1 to 7, wherein the actuator (40) comprises a controllable motor (41) suitable for varying the amount of perfume dispensed by the dispensing device (20) onto the test member.

9. System according to one of claims 1 to 8, further comprising an absorbent pad (16) arranged inside the housing and close to the opening (11), said absorbent pad being suitable for wiping at least a portion of the test member (60) during extraction of said test member.

10. System according to claim 9, wherein the absorbent pad (16) is positioned in a lower portion of the opening.

11. System according to one of claims 1 to 10, wherein the test member (60) has, in a longitudinal direction (X), a first portion (61) suitable for being impregnated with perfume and a second portion (62) suitable for manipulating said test member, and wherein the first portion (61) has a predetermined length such that, when the test member is in an inserted position where the sensor detects the presence of the test member, the first portion does not protrude outside the housing.

FIG. 1

FIG. 2

FIG. 3

FIG. 4

FIG. 5a

FIG. 5b

FIG. 5c

FIG. 5d

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2987761